# FASCICULE DE BREVET EUROPEEN

(11) **EP 3 559 515 B1**
(45) Date de publication et mention de la délivrance du brevet: **25.11.2020**
(21) Numéro de dépôt: 17829659.6
(22) Date de dépôt: 22.12.2017
(51) Int. Cl.: F16H 61/431, F16H 61/433, B60K 7/00, B60K 17/356

(54) **DISPOSITIF D'ASSISTANCE HYDRAULIQUE SUIVEUR D'UN ENGIN ESCLAVE**
NACHFOLGERVORRICHTUNG MIT HYDRAULISCHER UNTERSTÜTZUNG FÜR EIN SLAVE-FAHRZEUG
TRACKER HYDRAULIC ASSISTANCE DEVICE FOR A SLAVE CRAFT

(30) Priorité: 22.12.2016 FR 1663238
(43) Date de publication de la demande: 30.10.2019
(73) Titulaire: Poclain Hydraulics Industrie, 60410 Verberie (FR)
(72) Inventeur: SOHIER, Vincent, 60410 Verberie (FR)
(74) Mandataire: Regimbeau
(86) Numéro de dépôt international: PCT/EP2017/084505
(87) Numéro de publication internationale: WO 2018/115496

(56) Documents cités:
- EP-A1- 2 551 524
- WO-A1-2014/016304
- DE-A1- 2 150 571
- DE-A1- 3 809 869
- DE-A1-102007 051 185
- DE-A1-102016 000 946
- FR-A1- 2 935 128
- FR-A1- 3 004 148

## Description

### DOMAINE TECHNIQUE GENERAL

L'invention concerne le domaine de l'assistance hydraulique sur les engins suiveurs, c'est-à-dire les engins entrainés par un autre engin.

On parlera dans le présent texte d'engin esclave et d'engin maitre, reliés par un attelage ou un châssis. Par définition, la vitesse de l'engin esclave est déterminée par celle de l'engin maître. L'engin maitre et l'engin esclave peuvent être deux essieux d'un même véhicule, ou un véhicule et une remorque, qui lui est attelée. Un essieu esclave est aussi lié ou attelé mécaniquement par une suspension à la machine ou véhicule qui porte l'essieu maître.

Plus spécifiquement, l'invention concerne la gestion de la cylindrée d'une pompe à cylindrée variable intégrée dans un circuit d'assistance hydraulique de l'engin esclave.

### ETAT DE L'ART

Certains circuits d'assistance hydraulique sont alimentés par une pompe à cylindrée variable, dont la cylindrée peut être pilotée hydrauliquement, par exemple en faisant varier l'inclinaison d'un plateau sur lequel des pistons disposés circulairement glissent, faisant ainsi varier le volume de leur chambre respective. Le contrôle de la cylindrée se fait un généralement par un vérin double-effet définissant deux chambres de contrôle, pour piloter dans un sens ou dans l'autre la cylindrée de la pompe.

L'ajustement de la cylindrée permet de gérer la quantité d'huile envoyée à une ou plusieurs machines hydrauliques montées sur au moins une roue ou sur un essieu de l'engin esclave, via deux lignes d'alimentation qui relient la pompe et la machine hydraulique. Les machines hydrauliques peuvent fonctionner en moteur ou en pompe.

Cette gestion de la cylindrée est un élément essentiel du bon fonctionnement du couple maitre/esclave. En effet, les contraintes d'un engin esclave sont distinctes d'un engin maître. Par exemple, si trop d'huile est envoyée vers la machine hydraulique fonctionnant en moteur, comme la vitesse de rotation du moteur ne pouvant augmenter car elle est déterminée par la vitesse de l'engin maître, la pression aux bornes du moteur augmente et l'engin esclave risque de fournir trop de couple, ce qui peut perturber le contrôle de l'engin maître.

Inversement, si trop peu d'huile est envoyée vers le moteur hydraulique, l'effet opposé se produit et le moteur va générer un couple résistant, qui tend à faire ralentir l'engin maitre.

L'engin esclave doit idéalement pouvoir fonctionner selon les quatre quadrants, c'est-à-dire en marche avant et en poussée, en marche avant et en retenue, en marche arrière et en poussée, en marche arrière et en retenue.

Le sens de la marche dépend du sens du débit et le sens de l'apport en couple du signe de l'écart de pression aux bornes du machine hydraulique.

Il est connu de gérer la cylindrée de la pompe en utilisant une pompe de gavage, qui est une pompe classiquement prévue dans le domaine de l'assistance hydraulique pour gaver les circuits en huile et compenser les fuites nécessaires ou involontaires des circuits. La pompe de gavage fonctionne généralement entre 10 et 20 bars.

Le document EP2551524, quoique ne concernant pas les engins esclaves, décrit une telle solution. La pompe de gavage gère les deux chambres du vérin double effet. Le système décrit comprend en outre un limiteur de débit de sécurité qui déverse le surplus de pression d'une des lignes d'alimentation du moteur hydraulique dans le vérin double effet pour faire chuter la cylindrée de la pompe et ainsi de limiter la surcharge du circuit hydraulique.

Le document WO201416304 utilise une pompe de gavage qui cette fois alimente une seule des deux chambres du vérin double-effet. L'autre chambre est alimentée par la plus haute pression parmi les deux lignes d'alimentation via un limiteur de pression électriquement tarable. Il s'exerce ainsi un équilibre entre les deux pressions pour gérer la cylindrée de la pompe.

Néanmoins, ces solutions ne permettent pas d'obtenir un effet de suivi de cylindrée suffisamment performant. En particulier, si la pression dans une des lignes d'alimentation subit une variation imprévue, la répercussion au niveau de la gestion de la cylindrée ne se fait pas forcément et le contrôle des engins maitre/esclave peut être perturbé.

### PRESENTATION DE L'INVENTION

Pour résoudre les limitations décrites précédemment, l'invention propose un dispositif d'assistance hydraulique, par exemple d'un engin esclave, comprenant :
- une machine hydraulique, apte à motoriser une roue de l'engin,
- une pompe à cylindrée variable, comprenant un vérin double effet définissant deux chambres de contrôle, pour piloter hydrauliquement la cylindrée de ladite pompe,
- deux lignes d'alimentation, qui relient la machine hydraulique et la pompe à cylindrée variable pour former un circuit fermé,
caractérisé en ce que le dispositif comprend en outre :
- deux lignes de contrôle, chacune étant prélevée respectivement sur une des deux lignes d'alimentation et étant configurées pour alimenter respectivement une des deux chambres de contrôle,
- deux limiteurs de pression tarables électriquement disposés respectivement sur les deux lignes de contrôle.

En particulier, les limiteurs de pression sont configurés pour que les deux chambres du vérin double effet soient simultanément sous pression issue des deux lignes d'alimentation respectivement. En d'autres termes, les limiteurs de pression sont configurés pour que le vérin double effet soit piloté par les deux lignes de contrôle à la fois. Cela signifie que les deux limiteurs de pression sont tarés pour laisser passer de l'huile sous pression simultanément.

Avantageusement, les deux limiteurs de pressions sont tarables à partir d'une valeur comprise entre 0 et 5 bars et préférablement à partir de 0 bar.

Avantageusement, les limiteurs de pression sont tarés à leur valeur minimum lorsqu'ils ne sont pas pilotés électriquement.

Avantageusement, les lignes de contrôle comprennent chacune un gicleur de prélèvement en amont des limiteurs de pression pour que les lignes de contrôle effectuent un piquage sur les lignes d'alimentation. Ces gicleurs permettent de faire chuter la pression dans les chambres de contrôle en l'absence d'apport d'huile.

Avantageusement, les lignes de contrôle comprennent chacune un gicleur de fuite en aval du limiteur de pression, relié à un réservoir via un piquage, pour notamment amortir les variations de pression dans le système. Avec les gicleurs de prélèvements, ils créent un pont de gicleur qui permet de limiter les pressions impliquées et de créer un débit d'huile qui génère les pressions.

La pompe à cylindrée variable est généralement entraînée par une prise de force.

Le dispositif d'assistance hydraulique comprend avantageusement en outre une valve d'engagement, disposé sur les lignes d'alimentation, pour craboter ou décraboter la machine hydraulique.

Le dispositif d'assistance hydraulique comprend généralement en outre une pompe de gavage et une valve de contrôle, adaptée pour piloter hydrauliquement la valve d'engagement à partir de la pression de la pompe de gavage.

Le dispositif d'assistance hydraulique comprend avantageusement une unité de calcul, ladite unité de calcul permettant de piloter les limiteurs de débit tarables électriquement.

Avantageusement, l'unité de calcul est configurée pour piloter le limiteur de pression relié à la ligne d'alimentation de plus haute pression entre les deux lignes d'alimentation.

Avantageusement, l'unité de calcul est configurée pour piloter simultanément les deux limiteurs de pression ou pour simultanément ne pas piloter les deux limiteurs de pression.

L'invention concerne aussi un engin comprenant un dispositif tel que décrit précédemment.

L'invention concerne aussi une paire d'engins comprenant un engin maitre auquel est attaché un engin esclave défini précédemment. L'engin maître et l'engin esclave peuvent être deux essieux d'un même véhicule ou bien deux véhicules attelés par un attelage.

L'engin maitre peut comprendre une prise de force pour alimenter la pompe hydraulique à cylindrée variable de l'engin esclave.

L'invention propose aussi un procédé d'assistance hydraulique à l'aide d'un dispositif, d'un engin ou d'une paire d'engins tels que décrits précédemment. Le procédé comprend l'étape suivante de pilotage d'au moins un des limiteurs de pression tarables électriquement.

Avantageusement, le procédé comprend les étapes suivantes :
- dépilotage des deux limiteurs de pression,
- crabotage de la machine hydraulique,
- pilotage d'un seul parmi les deux limiteurs de pression.

Avantageusement, le choix du limiteur de pression à tarer se fait selon les données obtenues par un capteur. Le capteur peut être un capteur d'effort, un capteur inclinomètre, un capteur de sens de roulage et/ou un capteur de sens de l'effort.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- la figure 1 représente un circuit conforme à un mode de réalisation de l'invention,
- les figures 2 à 3 illustrent différents moments de fonctionnement du circuit conforme à un mode de réalisation de l'invention,
- les figures 4a et 4b, 5a et 5b, 6a et 6b, 7a et 7b, illustrent la situation des deux engins et le fonctionnement du circuit, respectivement en marche avant et apport de couple, marche arrière et apport de couple, marche avant et retenue, marche arrière et retenue (les flèches sur les lignes hydrauliques indiquant le sens du débit.

### DESCRIPTION DETAILLEE

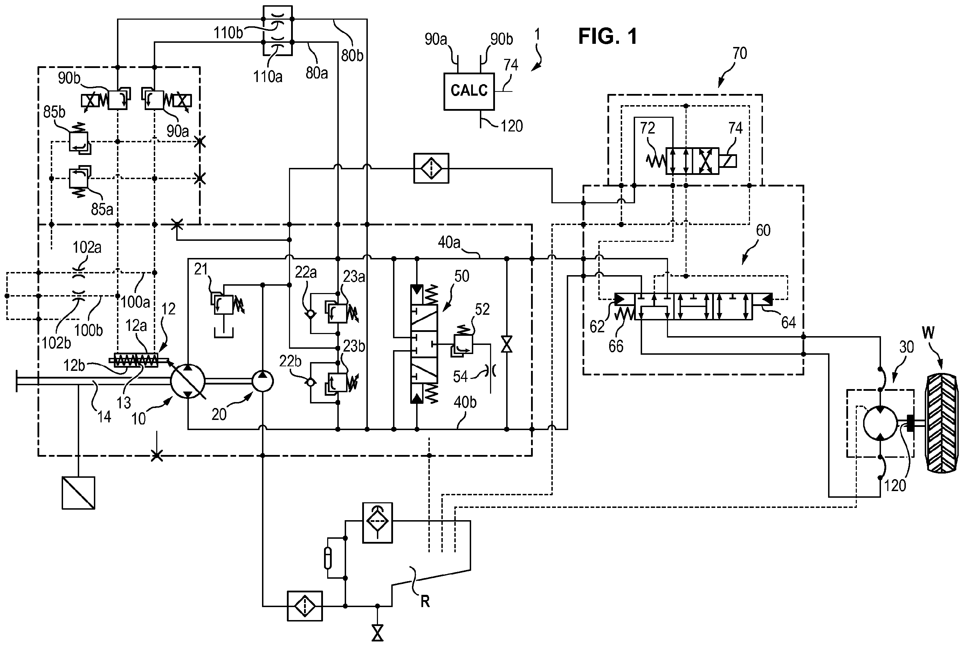

En référence à la **figure 1**, un dispositif d'assistance hydraulique 1 conforme à un mode de réalisation va être décrit. Ce dispositif est monté sur un engin esclave 2 tel que décrit en introduction.

Le dispositif hydraulique comprend une pompe hydraulique à cylindrée variable 10. La pompe 10 peut avoir un débit positif ou un débit négatif, c'est-à-dire que son admission peut devenir son refoulement et vice-versa. La cylindrée est pilotable hydrauliquement à l'aide d'un vérin double effet 12 comprenant deux chambres de contrôle 12a, 12b. On appelle Pa, respectivement Pb, la pression dans la première chambre 12a, respectivement la deuxième chambre 12b. Si la pression Pa est supérieure, respectivement inférieure, à la pression Pb, la pompe 10 se met en cylindrée négative maximum, respectivement en cylindrée positive maximum. Une cylindrée nulle s'obtient en équilibrant les efforts au sein du vérin double effet 12.

En définissant, ΔP = Pb-Pa, la cylindrée est négative si ΔP est négatif et la cylindrée est positive si ΔP est positif

Par exemple, le vérin double effet 12 pilote l'inclinaison d'un plateau. Il se pilote typiquement avec des pressions comprises entre 10 et 25 bars. Des moyens de rappels 13 peuvent maintenir le vérin 12 en position neutre, c'est-à-dire que la pompe 10 a alors une cylindrée nulle. C'est notamment l'effort de ces moyens de rappels 13 que doit vaincre les pressions précitées. Les moyens de rappels 13 permettant notamment un retour à un débit nul de la pompe en cas de défaillance électrique.

Une valeur de |ΔP| = 16 bars environ est couramment utilisée.

La pompe 10 peut aussi fonctionner en moteur.

La pompe 10 est entraînée par une prise de force 14 (« power take-off PTO » en anglais) qui provient d'un engin maitre 3 (incorrectement référencé sur les **figures,** qui ne représentent que l'engin esclave).

La prise de force 14 entraine généralement une autre pompe 20, appelée pompe de gavage, qui sert à garantir la présence d'huile dans les circuits et à piloter certaines valves. La pompe de gavage 20 fonctionne à une pression de gavage Pg aux alentours de 10 à 20 bars. La pompe de gavage 20 prélève l'huile dans un réservoir R, qui est à une pression qualifiée de nulle, qui fait fonction de réserve d'huile.

Le dispositif hydraulique comprend en outre une machine hydraulique 30 qui permet de motoriser l'engin esclave, par exemple au niveau d'une roue R. La machine hydraulique 30 peut fonctionner en pompe ou en moteur.

La pompe 10 et la machine hydraulique 30 sont reliées entre elles par deux lignes d'alimentation 40a, 40b formant un circuit fermé (on parlera d'une première ligne 40a et d'une deuxième ligne 40b). Chacune des lignes d'alimentation 40a, 40b peut être haute ou basse pression.

Le dispositif présenté fonctionne selon les quatre quadrants présentés en introduction. Le débit dans les lignes d'alimentation 40a, 40b peut donc s'inverser.

Un système de gavage, largement connu, est classiquement prévu, à l'aide d'un limiteur de pression 21 de sécurité pour la surcharge, qui définit la pression de gavage maximale et de deux clapets de gavage alimentés par la pompe de gavage 20, sous la forme de clapets anti-retour 22a, 22b pour chacun des lignes d'alimentation 40a, 40b.

Une protection contre la surpression dans chaque branche de la boucle fermée est prévue sous la forme des limiteurs de pression 23a, 23b de sécurité, pour chacune des lignes d'alimentation 40a, 40b. D'une manière connue en soi les limiteurs de pression 23a, 23b sont couplés avec les clapets de gavage 22a, 22b et en cas de surpression, les limiteurs 23a, 23b évacuent de l'huile en sens inverse vers le circuit de gavage, et l'excès de pression est évacué par le limiteur de pression 21 du circuit de gavage.

Un système d'échange d'huile est prévu à l'aide d'un sélecteur basse-pression 50 entre les deux lignes d'alimentation 40a, 40b, couplée à un limiteur de pression 52 et une restriction 54. Le débit de fuite passant par la restriction 54 retourne au réservoir R. Cet ensemble optionnel et connu en soi sert à faire sortir de l'huile chaude de la boucle fermée, uniquement à partir de la ligne d'alimentation en plus basse pression, ce qui a pour effet de faire venir autant d'huile fraiche provenant du gavage, et donc de limiter l'échauffement de l'huile contenue dans la boucle fermée.

Cette huile chaude se déverse dans le carter de la pompe représenté en traits pointillés, et une sortie de drain collecte ces fuites, et les renvoie au réservoir R. Un échangeur thermique non représenté peut être placé sur cette ligne pour refroidir l'huile.

Pour permettre l'activation ou la désactivation de l'assistance hydraulique, une valve d'engagement 60 est prévue sur les lignes d'alimentation 40a, 40b. Cette valve comprend au moins deux positions : dans une position de roue libre, la machine hydraulique 30 tourne à vide et, dans une position d'assistance, les lignes d'alimentation 40a, 40b sont reliées à la machine hydraulique 30. Une position intermédiaire, de transition, peut être prévue, dans laquelle les deux lignes d'alimentation 40a, 40b sont reliées entre elle, en plus de relier la pompe 10 à la machine hydraulique 30, afin de limiter les à-coups.

Un actionneur 62, piloté hydrauliquement, met la valve en position de roue libre et un autre actionneur 64, piloté hydrauliquement, met la valve d'engagement 60 en position d'assistance. Des moyens de rappel 66, qui poussent dans le même sens que l'actionneur 62, permettent la mise en position intermédiaire durant un laps de temps relativement court.

Une valve de pilotage 70 pilote hydrauliquement la valve d'engagement 60 à l'aide de la pression issu de la pompe de gavage 20. Dans une position par défaut, la pression de gavage est envoyée vers l'actionneur 62 et la machine hydraulique 30 est mise à vide en la reliant à une pression de réservoir. Dans une position pilotée, la pression de gavage est envoyée vers l'actionneur 64 et la machine hydraulique 30 est alimentée en huile sous pression. Les moyens de rappel 66 permettent de ralentir le changement de position de la valve d'engagement 60 et ainsi de mettre la valve d'engagement 60 en position intermédiaire. La position intermédiaire peut être une position fugitive. Le mouvement se fait en deux temps : dans un premier temps le remplissage des lignes aller et retour de la machine 30, puis sortie de pistons, et seulement lorsque les pistons sont en appui sur la came se produit une montée en pression dans ces lignes, qui permet la commutation du tiroir de la valve 60 pour la mise en communication des lignes 40a et 40b avec le moteur 30. La valve de pilotage 70 comprend des moyens de rappel 72, pour maintenir la valve en position par défaut et comprend un actionneur 74 électrique, pour piloter la valve.

La valve de pilotage 70 est typiquement pilotée électriquement par une unité de calcul CALC. La valve de pilotage 70 est typiquement une valve quatre orifices, deux positions.

Alternativement, la valve d'engagement 60 peut être pilotée électriquement (les actionneurs 62, 64 sont pilotés électriquement) ou pneumatiquement (les actionneurs 62, 64 sont pilotés pneumatiquement, c'est-à-dire avec une pression d'air comprimé).

Le dispositif comprend en outre une première ligne de contrôle 80a qui relie la première ligne d'alimentation 40a à la première chambre 12a du vérin double effet 12. De la même façon, une deuxième ligne de contrôle 80b relie la deuxième ligne d'alimentation 40b à la deuxième chambre 12b.

Sur chacune des lignes de contrôle 80a, 80b est prévu un limiteur de pression 90a, 90b, tarable électriquement. Le tarage est piloté par l'unité de calcul CALC, qui peut être soit sur l'engin esclave 2, soit sur l'engin maitre 3.

Les limiteurs de pression 90a, 90b permettent de contrôler le niveau de pression dans les chambres de contrôle 12a, 12b respectives. Le pilotage du vérin double effet 12 ne se fait donc qu'avec des pressions issues des lignes d'alimentation 40a, 40b. La pompe de gavage 20 n'intervient plus directement, en particulier lorsque le dispositif d'assistance est activé et que les pressions dans les lignes d'alimentation 40a, 40b ne proviennent pas du gavage par la pompe de gavage 20.

Plus spécifiquement, les limiteurs de pression 90a, 90b sont tarés de telle sorte que les deux chambres de contrôle 12a, 12b du vérin double effet 12 puissent être simultanément sous pression issue des deux lignes d'alimentation 40a, 40b. En d'autres termes, les deux limiteurs de pression 90a, 90b peuvent laisser passer de l'huile simultanément.

Du fait de la présence de la pompe de gavage 20, la pression dans les lignes d'alimentation 40a, 40b est au moins égale à la pression de gavage Pg, à tout le moins lorsque le circuit hydraulique est activé. Pour que la cylindrée de la pompe 10 puisse être ajustée, il faut que de la pression issue des lignes d'alimentation 40a ou 40b puisse traverser les limiteurs de pression 90a ou 90b. Par conséquent, les limiteurs de pression 90a, 90b sont tarables à une valeur minimum inférieure à la pression de gavage, et préférablement moins, pour que la pression Pa ou Pb traversant un des limiteurs 90a, 90b puisse être égale à la pression nécessaire (dans le cas où l'autre limiteur est bloquant) autorisant un contrôle en cylindrée maximale (ou minimale). Dans un mode de réalisation préférentiel, les limiteurs de pressions 90a, 90b sont tarables à partir d'une valeur comprise entre 0 et 5 bars. Similairement, ils sont tarables jusqu'à 100 bars, voire 200 bars, voire 300 bars. Cela signifie qu'ils peuvent balayer toute la plage de pression des lignes d'alimentation. Un limiteur taré à 0 bar est un limiteur passant mais en pratique, lorsque la commande électrique demande 0 bar, les composants internes du limiteur provoqueront une perte de charge inévitable (de l'ordre de quelques bars).

Un limiteur de pression laisse passer un débit lorsque la pression en amont atteint sa pression de tarage. Par exemple, un limiteur de débit taré à 20 bars, laisse passer une pression supérieure ou égale à 20 bars. La pression en aval du limiteur est alors égale à la pression en amont moins la pression de tarage.

Comme les pressions peuvent atteindre 400 bars dans les circuits d'alimentation, plusieurs systèmes sont prévus pour limiter la pression dans les chambres de contrôles 12a, 12b. En particulier, deux limiteurs de pression de sécurité 85a, 85b sont disposés sur les lignes de contrôle 12a, 12b respectives, entre les chambres de contrôle 12a, 12b et les limiteurs de pressions tarables 90a, 90b. Les limiteurs de pression de sécurité 85a, 85b sont donc typiquement tarés à des valeurs de 30 à 50 bar. Ils sont utiles en cas de délestage rapide sur une ligne 100a, 100b et sachant que le débit ne peut sortir à l'envers par les limiteurs 90a, 90b. Cela permet donc au tiroir de contrôle 13 de revenir en arrière rapidement. Les limiteurs 85a, 85b n'ont pas de rôle fonctionnel particulier dans le cadre de l'invention, sauf exception.

Afin qu'en l'absence de l'application d'une pression venant des limiteurs de pression les chambres 12a, 12b ne soient plus contrôlés, les lignes de contrôle 80a, 80b sont chacune dotées en aval des limiteurs de pression tarables 90a, 90b d'un piquage 100a, 100b avec gicleur 102a, 102b qui se déverse dans le réservoir R. Par conséquent, la pression dans ladite ligne de contrôle 80a, 80b retombe dès lors que le limiteur de pression 90a, 90b associé est bloquant. En outre, ces gicleurs 102a, 102b permettent l'établissement d'un débit d'huile, faible, qui permet de créer une pression dans les lignes 100a, 100b.

Afin d'éviter des phénomènes d'oscillations ou de pompe, des gicleurs de prélèvement 110a, 110b sont prévus sur les lignes de contrôle 80a, 80b en amont des limiteurs tarables 90a, 90b. Ces gicleurs 110a, 110b permettent ainsi d'effectuer un piquage sur les lignes d'alimentation 40a, 40b. Ces gicleurs ont également un rôle dynamique d'amortissement pour la stabilité du système, en évitant des variations rapides de débit.

En outre, couplés avec les gicleurs de fuite 102a, 102b, ils permettent de réaliser un pont de gicleur permettant de travailler sur une pression générée par un débit d'huile et aussi de faire baisser la pression intermédiaire. Cela évite de faire travailler les valves et autres appareils aux valeurs de pression des lignes d'alimentation 40a, 40, mais à des valeurs moindres. La pression de travail pour contrôler la cylindrée de la pompe étant généralement inférieure à 20 bars, il n'est pas nécessaire que les pressions dans les lignes de contrôle 80a, 80b atteignent des valeurs élevées.

Le dimensionnement des restrictions de couples 102a/110a et 102b/110b permet de contrôler les paramètres du dispositif en ce qui concerne le déplacement du vérin double effet et des pressions dans les lignes de contrôle 80a, 80b entre le pont de gicleurs.

Dans un mode de réalisation, le diamètre des gicleurs 102a, 102b est de 0,67 mm et le diamètre de gicleurs 110a, 110b est de 0,9mm. Cela permet d'avoir une pression Pa ou Pb d'environ 16 bars.

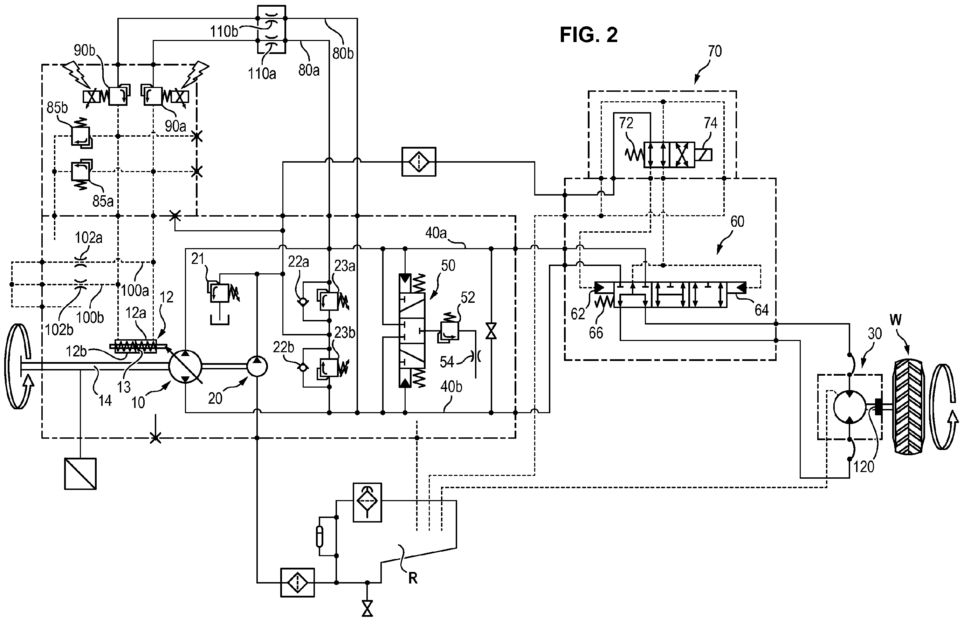

La **figure 2** illustre le démarrage du dispositif 1.

Le circuit est pressurisé à l'aide de la pompe de gavage 20. A ce stade, la pompe 10 ne doit toujours pas débiter : pour cela, il faut que les pressions Pa, Pb dans les deux chambres de contrôle 12a, 12b soient identiques. Pour cela, deux options sont possibles.

Soit, comme illustré avec des éclairs en **figure 2****,** les deux limiteurs 90a, 90b sont pilotés électriquement pour être surtarés, c'est-à-dire tarés au-delà de la pression dans les lignes d'alimentation (en l'espèce la pression de gavage Pg), de sorte que la pression en aval des limiteurs 90a, 90b est nulle.

Soit les deux limiteurs 90a, 90b sont dépilotés, et laissent passer tous les deux la même pression, qui est la pression de gavage Pg moins la valeur minimum de tarage des limiteurs 90a, 90b en l'absence de pilotage. Préférentiellement, comme indiqué précédemment, les limiteurs ont une valeur minimum de tarage de 0 bars. Par conséquent, la pression dans les deux chambres de contrôle 12a, 12b est comprise entre 0 (modulo les pertes de charge inhérente aux limiteurs 90a, 90b) et la pression de gavage (modulo les mêmes pertes de charge et les gicleurs 100a, 110b).

Si jamais il y a un léger écart de pression (dû aux pertes de charge de différents composants), par exemple une légère surpression dans la deuxième ligne d'alimentation 80b, on ΔP >0 donc la pompe 10 va se mettre en cylindrée positive et débiter de l'huile dans la première ligne d'alimentation 40a. Comme la valve d'engagement 60 est en position à vide, une surpression va se créer dans la ligne d'alimentation 40a et cette surpression va être déversée via le limiteur 90a. La pression Pa dans la chambre de contrôle 12a augmente et va alors venir égaliser celle Pb de la chambre 12b, ce qui tend à faire baisser la cylindrée de la pompe 10. Une fois la cylindrée revenue à 0 (ΔP >0), la pompe ne débite plus et la surpression dans la ligne d'alimentation 40b disparait : le système s'équilibre naturellement vers un débit nul.

Dans cette configuration, la prise de force 14 peut tourner sans que la pompe 10 ne débite et la machine hydraulique 30 peut tourner à vide, sans générer de couple. L'engin esclave 2 peut être déplacé librement.

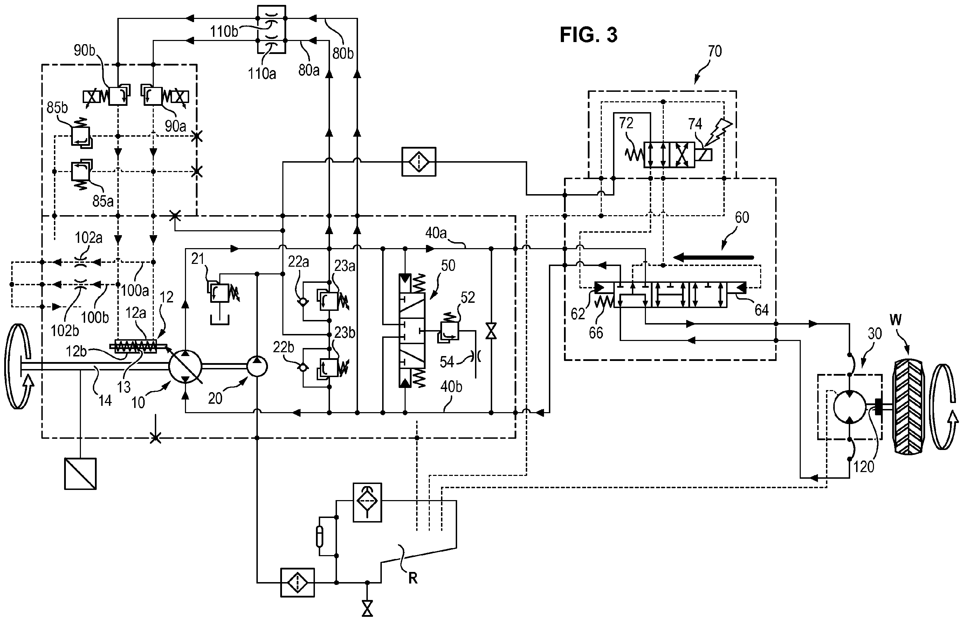

Si l'utilisation de la machine hydraulique 30 est requise, la valve de pilotage 70 est pilotée par l'unité de calcul CALC, ce qui provoque l'enclenchement de la valve d'engagement 60, comme illustré avec l'éclair et la flèche en **figure 3****.** Si aucun couple n'est demandé, les deux limiteurs 90a, 90b sont non pilotés. La pompe 10 et la machine hydraulique 30 sont alors engagées.

Si l'engin esclave est déplacé, par exemple vers l'avant, alors la machine hydraulique 30 pompe de l'huile et crée une très légère surpression, respectivement une très légère dépression, dans la deuxième ligne d'alimentation 40b, respectivement la première ligne d'alimentation 40a (la machine hydraulique 30 devient temporairement une pompe hydraulique). Par conséquent, le limiteur de pression 90b transfère une partie de la surpression à la deuxième chambre de contrôle 90b, qui tend à augmenter positivement la cylindrée (on a Pb qui augmente donc on a un ΔP >0) : un débit d'huile est généré, qui vient injecter de l'huile dans la première ligne d'alimentation 40a en dépression, ce qui fait diminuer l'écart de pression entre les deux lignes d'alimentation 40a, 40b. Cet écart de pression se traduit directement au niveau des chambres de contrôle 12a, 12b (on rappelle que les limiteurs 90a, 90b sont non pilotés) qui tendent à trouver un équilibre pour que le débit de la pompe 10 suive le débit du moteur 30. Le débit de la pompe 10 est donc suiveur du débit imposé par la machine 30, sans qu'un couple sensible soit fourni.

Ce principe fonctionne de façon identique en marche avant et arrière.

En pratique, le basculement de la pompe intervient pour une pression de 3 à 15 bars, ce qui fait que le delta de pression se stabilise à cette valeur. En présence du ressort 13, la ΔP entre la première chambre 12a et la deuxième chambre 12b varie entre 3 et 12 bars, à une cylindrée de la pompe correspond un ΔP sur le contrôle, correspond une position du plateau de la pompe.

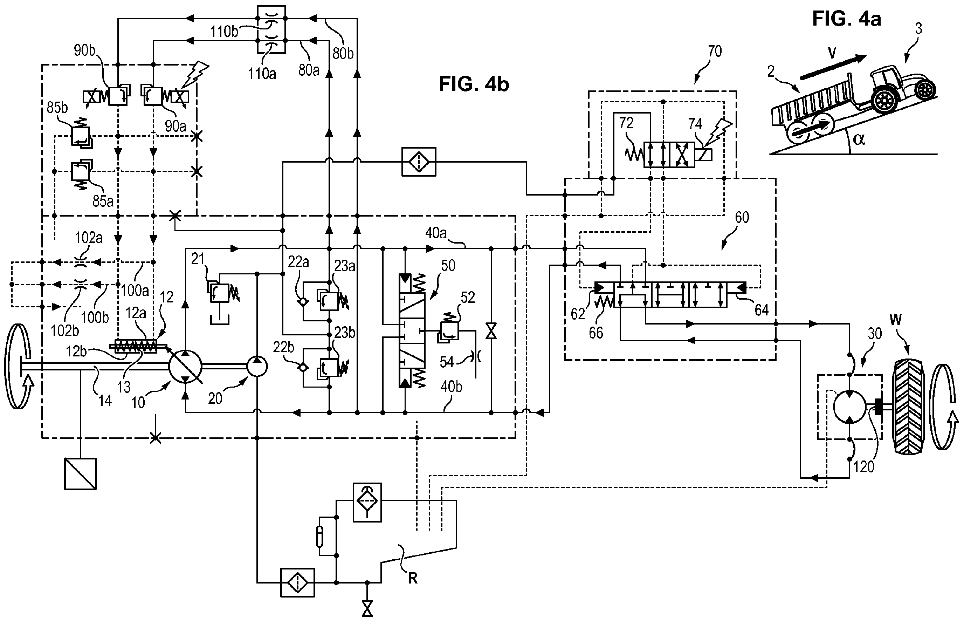

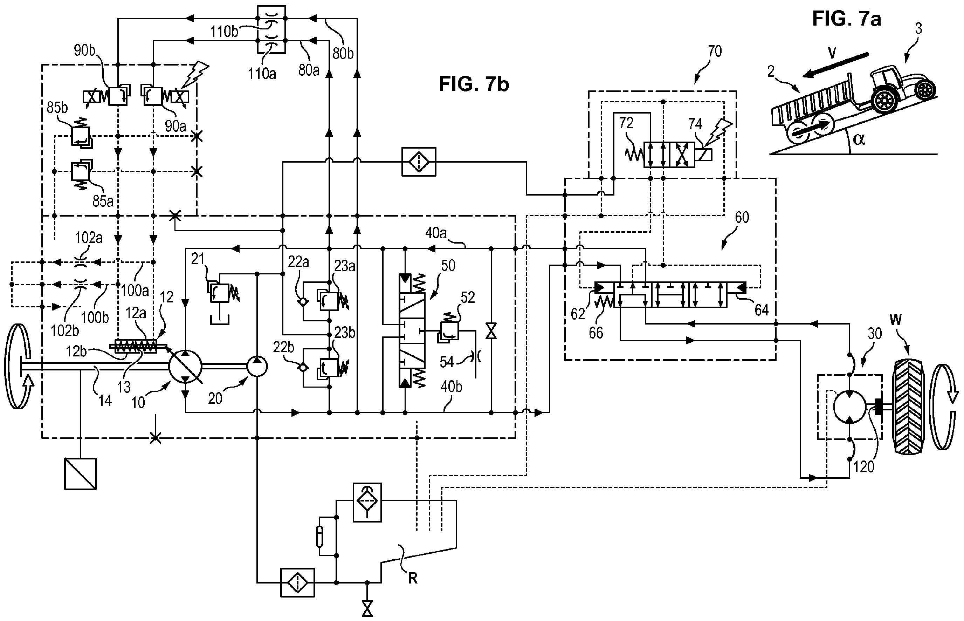

A présent, différents cas de figures dans lesquels l'assistance hydraulique est requise vont être décrits en **figures 4a/4b à 7a/7b**.

En **figure 4a** est schématisé un engin esclave 2 et un engin maitre 3 en marche avant et en montée. Dans cette situation, on souhaite que le machine hydraulique 30 fonctionne en moteur et apporte du couple aux roues.

Pour cela, comme illustré en **figure 4b****,** le limiteur de pression 90a de la première ligne d'alimentation 40a est taré par l'unité de calcul CALC à une valeur spécifique, qui détermine directement le couple que l'on veut apporter aux roues. L'autre limiteur 90b est détaré.

En augmentant le tarage du limiteur 90a, la pression Pa dans la première chambre de contrôle 12a diminue (on rappelle que la pression en aval du limiteur correspond à la pression en amont moins la valeur de tarage, modulo le pont de gicleur) et devient inférieure à la pression Pb dans la deuxième chambre de contrôle 12b. Par conséquent, la cylindrée de la pompe 10 tend à augmenter. Comme la vitesse du moteur 30 est déterminée par la vitesse de l'engin maitre, la conséquence de l'augmentation de la cylindrée est la création d'une surpression dans la première ligne d'alimentation 40a, ce qui crée un écart de pression aux bornes du moteur 30 et donc un apport en couple aux roues.

La surpression dans la première ligne d'alimentation 40a augmente jusqu'à ce que les pressions des chambres de contrôle 12a et 12b trouvent un point d'équilibre tel que le débit de la pompe 10 permette le maintien de la pression désirée dans la ligne 40a ou 40b. Comme le débit se stabilise, l'écart de pression entre les deux lignes d'alimentation 40a, 40b se stabilise aussi, de sorte que ΔP se stabilise aussi, ce qui stabilise à son tour le débit. Dans la mesure où la pression Pa dans la chambre de contrôle 12a en fonction de la pression dans la première ligne d'alimentation 40a dépend directement de la valeur de tarage du limiteur 90a, la valeur de tarage du limiteur 90a permet de régler la valeur du couple à apporter.

Si la valeur de tarage choisie fait que le couple demandé au moteur est trop important, on déleste par les limiteurs de pression de sécurité 23, ou bien les roues W glissent (perte d'adhérence, patinage). Le tarage maximal peut être choisi par voie électronique, par exemple en fonction de la nature de la machine équipée, et/ou selon les conditions d'adhérence utilisables comme données d'entrées (capteurs de vitesse et/ou sélecteur de tarage sur le tableau de bord).

La première ligne de contrôle 80a joue ici un rôle de rétrocontrôle sur la pression exercée par la deuxième ligne de contrôle 80b, qui permet de stabiliser le couple transmis au moteur 30. On a donc un contrôle basé sur la différence de pression entre les deux lignes 40a, 40b, donc sur la différence de pression aux bornes de la machine 30, donc de la manière la plus exacte vis-à-vis du couple fourni par la machine 30.

A titre d'exemple, la pression Pb est de 16 bars (elle tend à rendre la cylindrée maximale positive) et la pression Pa varie entre 0 et 16 bars en fonction du pilotage du limiteur 110a (rétrocontrôle qui vient piloter la cylindrée entre une cylindrée maximale positive et une cylindrée nulle). On a donc toujours ΔP >0, ce qui signifie que la pompe 10 débite bien en positif.

En particulier, si une perturbation vient faire varier la pression dans les deux lignes d'alimentation 40a, 40b, la répercussion sur la pompe 10 est immédiate, à l'inverse des systèmes utilisant (uniquement ou en combinaison avec une des pressions des lignes d'alimentation) la pression de gavage Pg pour piloter la cylindrée de la pompe 10.

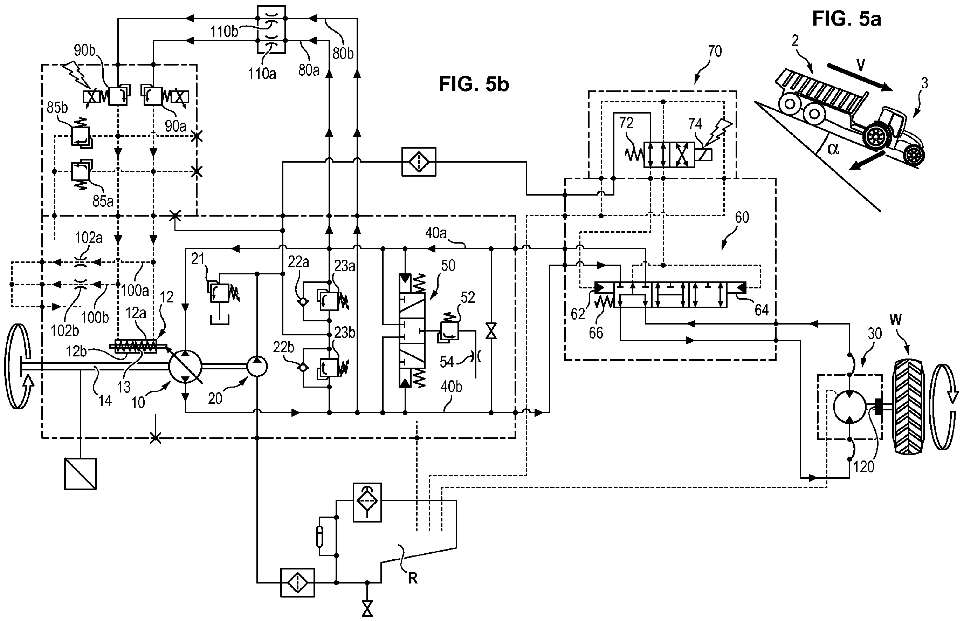

Ce qui a été décrit en marche avant et en apport de couple est en tout point similaire pour le cas de la **figure 5a****,** où l'engin esclave est en marche arrière avec apport de couple. Dans ce cas présent, le fonctionnement est inversé : le sens de débit est inversé, les pressions entre les deux lignes d'alimentation 40a, 40b sont inversés et le pilotage des limiteurs 90a, 90b est inversé. Le circuit illustré en **figure 5b** montre cela.

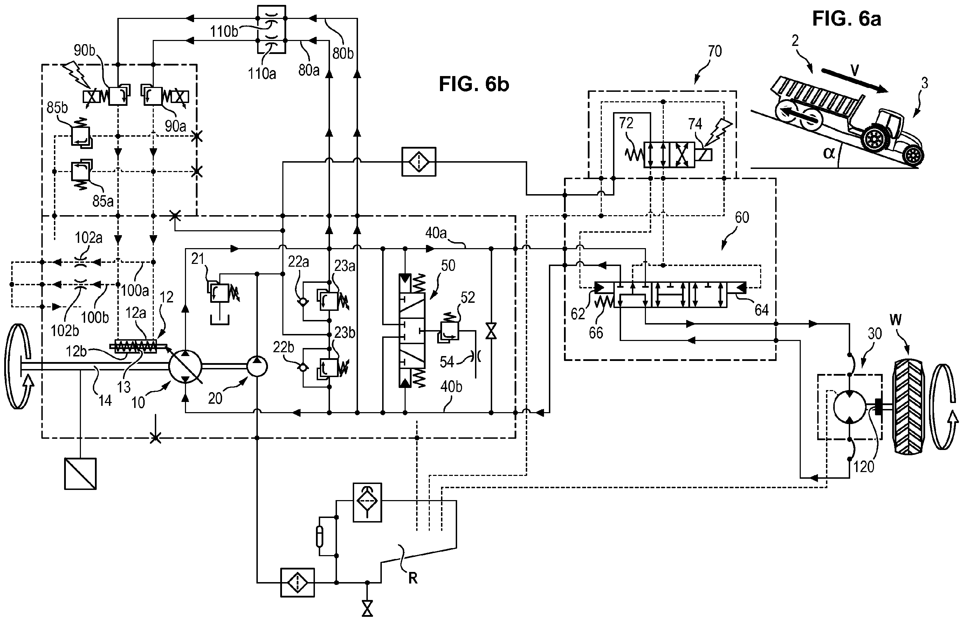

En **figure 6a** est schématisé un engin esclave 2 et un engin maitre 3 en marche avant et en descente. Dans cette situation, on souhaite que la machine hydraulique 30 freine les roues (couple résistif ou couple négatif) et fonctionne donc comme une pompe.

Pour cela, comme illustré en **figure 6b****,** le limiteur de pression 90b de la deuxième ligne d'alimentation 40b est taré par l'unité de calcul CALC à une valeur spécifique, qui détermine directement le couple résistif que l'on veut impartir aux roues W. L'autre limiteur 90a est détaré donc en l'absence de pression dans la ligne 100b, la cylindrée de la pompe 10 deviendrait négative, ce qui ne doit pas arriver vu que l'engin est toujours en marche avant.

Par conséquent, le tarage du limiteur 90b est effectué de sorte que la pression Pb reste supérieure ou égale à la pression Pa (ΔP est positif ou nul quoi qu'il arrive).

En augmentant le tarage du limiteur 90b, la pression dans la deuxième chambre de contrôle 12b diminue (on rappelle que la pression en aval du limiteur correspond à la pression en amont moins la valeur de tarage, modulo le pont de gicleurs). Par conséquent, la cylindrée de la pompe 10 tend à diminuer (mais elle doit rester positive, car l'engin est en marche avant). Comme la vitesse du moteur 30 est déterminée par la vitesse de l'engin maitre, la conséquence de la baisse de la cylindrée est la création d'une sur-pression dans la deuxième ligne d'alimentation 40b : la machine hydraulique 30, entrainée par la roue W, se met à fonctionner en pompe et la pompe 10 fonctionne alors comme un frein moteur.

La surpression dans la deuxième ligne d'alimentation 40b augmente jusqu'à ce que les pressions Pa et Pb dans la chambre de contrôle 12a, 12b trouvent un point d'équilibre avec les moyens de rappel 13, tel que le débit de la pompe 10 permette le maintien de la pression désirée dans les lignes d'alimentation 40a ou 40b. Comme le débit se stabilise, l'écart de pression entre les deux lignes d'alimentation 40a, 40b se stabilise aussi. Dans la mesure où la pression dans la chambre de contrôle 12b dépend directement de la valeur de tarage du limiteur 90b, la valeur de tarage du limiteur 90b permet de régler la valeur du couple résistif.

La deuxième ligne de contrôle 80b joue un rôle de rétrocontrôle sur la pression exercée par la première ligne de contrôle 80a qui permet de stabiliser le couple résistif du moteur 30.

A titre d'exemple, la pression Pa est de 16 bars (elle tend à rendre la cylindrée maximale négative) et la pression Pb varie entre 16 et 32 bars en fonction du pilotage du limiteur 110b (rétrocontrôle qui vient piloter la cylindrée entre une cylindrée maximale positive et une cylindrée nulle). On a bien toujours ΔP = Pb - Pa positif ou nul.

On remarque ainsi que la valeur du pilotage du limiteur 90b dans la configuration marche avant en retenue de la **figure 5b** n'est pas identique à la valeur du pilotage du limiteur 90a dans la configuration marche avant en apport de couple de la **figure 4b****.**

On a donc de la même façon un contrôle basé sur la différence de pression entre les deux lignes 40a, 40b, donc sur la différence de pression aux bornes de la pompe 10, donc de la manière la plus exacte vis-à-vis du couple résistif fourni par la pompe 10.

En particulier, si une perturbation vient faire varier la pression dans une des deux lignes, la répercussion sur la pompe 10 est immédiate, à l'inverse des systèmes utilisant (uniquement ou en combinaison avec une des pressions des lignes d'alimentation) la pression de gavage Pg pour piloter la cylindrée de la pompe 10.

Ce qui a été décrit en marche avant et en contrôle de couple est en tout point similaire pour le cas de la **figure 7a****,** où l'engin esclave est en marche arrière avec retrait de couple (par exemple en descente). Dans ce cas présent, le fonctionnement est inversé : le sens de débit est inversé, les pressions entre les deux lignes d'alimentation 40a, 40b sont inversés, le pilotage des limiteurs 9a0, 90b. Le circuit illustré en **figure 7b** montre cela.

Les situations d'apport de couple et de couple résistant sont généralement associées à des montées ou des descentes (définies selon le sens de la marche avant du véhicule). Une solution pour permettre le pilotage du tarage des limiteurs 90a, 90b est de prévoir des capteurs. Ces capteurs peuvent être des capteurs d'effort, par exemple d'effort de traction entre les deux engins, ou capteur d'effort au crochet (ou selle d'attelage), ou bien un capteur inclinomètre qui détecte le sens d'inclinaison du véhicule et qui permet d'identifier si l'engin esclave est dans une descente ou une montée, ou d'autres capteurs liés à la charge sur l'engin esclave (illustré par 120 sur la **figure 1**), ou d'autres capteurs qui détermine le sens de l'effort, ou des capteurs de charge liés au niveau d'enfoncement des suspensions.

Les données récupérées par le capteur ou les capteurs sont transmises à l'unité de calcul CALC qui les traite, pour ensuite piloter électriquement les limiteurs 90a, 90b.

D'une façon générale, l'unité de calcul CALC ne reçoit ou détermine qu'une indication du couple qu'on veut exercer, et ne reçoit en aucun cas une indication de vitesse de roue qui imposerait une cylindrée de pompe. L'unité de calcul CALC détermine le tarage des limiteurs 90a 90b, et ne pilote pas la pompe en déterminant sa cylindrée ou une position du plateau pompe, et n'utilise pas une indication de position du plateau pompe ou d'un indicateur de recopie de position du plateau pompe. Il n'y ainsi pas de pilotage en vitesse, mais uniquement en couple.

Par exemple, quel que soit l'état de charge, ou de gonflage, ou de l'enfoncement dans le sol, ou du diamètre des roues de l'engin esclave, le débit de la pompe 10 sera toujours ajusté pour fournir le couple (positif ou résistif) souhaité à la machine hydraulique 30, sur toute la plage de vitesse des engins.

Le dispositif présenté ici permet donc d'être suiveur et de s'adapter aux besoins de l'engin esclave, quelle que soient les conditions de roulement. En outre, l'adaptation de la cylindrée se fait de façon immédiate et précise du fait qu'elle dépend des pressions dans les deux lignes d'alimentation 40a, 40b de manière simultanée.

Les machines maitres et esclaves peuvent être respectivement : un tracteur agricole et une remorque, un tracteur agricole et un engin tracté (par exemple un autre tracteur et une charrue portée à roues), un tracteur de camion (au sens de route ou de chantier) et sa remorque (semi-remorque), un camion (au sens de route ou de chantier) et une remorque attelée (train routier), un premier essieu d'un camion (essieu moteur du camion) et un essieu hydraulique supplémentaire (essieu porteur du camion).

Dans un autre mode de réalisation, le dispositif décrit s'applique de la même façon à un engin non-esclave, c'est-à-dire un engin pleinement moteur et piloté par un opérateur. Dans ce mode de réalisation, l'unité de calcul CALC reçoit des instructions de couple ou de vitesse de la part de l'opérateur et les convertit en instructions de tarage pour les limiteurs 90a, 90b. Ainsi, on peut motoriser un engin (un ou plusieurs essieux) tout en gardant un très bon contrôle de suivi de couple.

## Revendications

1. Dispositif d'assistance hydraulique comprenant :
- une machine hydraulique (30), apte à motoriser une roue (W) d'un engin,
- une pompe à cylindrée variable (10), comprenant un vérin double effet (12) définissant deux chambres de contrôle (12a, 12b), pour piloter hydrauliquement la cylindrée de ladite pompe (10),
- deux lignes d'alimentation (40a, 40b), qui relient la machine hydraulique (30) et la pompe à cylindrée variable (10) pour former un circuit fermé,
**caractérisé en ce que** le dispositif comprend en outre :
- deux lignes de contrôle (80a, 80b), chacune étant prélevée respectivement sur une des deux lignes d'alimentation (40a, 40b) et étant configurées pour alimenter respectivement une des deux chambres de contrôle (12a, 12b),
- deux limiteurs de pression tarables électriquement (90a, 90b) disposés respectivement sur les deux lignes de contrôle (80a, 80b).

2. Dispositif d'assistance hydraulique selon la revendication 1,
dans lequel les deux limiteurs de pression (90a, 90b) sont tarés pour laisser passer de l'huile sous pression simultanément.

3. Dispositif d'assistance hydraulique selon l'une quelconque des revendications précédentes, dans lequel les deux limiteurs de pressions (90a, 90b) sont tarables à partir d'une valeur comprise entre 0 et 5 bars et préférablement à partir de 0 bar.

4. Dispositif d'assistance hydraulique selon l'une quelconque des revendications précédentes, dans lequel les limiteurs de pression (90a, 90b) sont tarés à leur valeur minimum lorsqu'ils ne sont pas pilotés électriquement.

5. Dispositif d'assistance hydraulique selon l'une quelconque des revendications précédentes, dans lequel les lignes de contrôle (80a, 80b) comprennent chacune un gicleur de prélèvement en amont des limiteurs de pression (90a, 90b) pour que les lignes de contrôle (80a, 80b) effectue un piquage sur les lignes d'alimentation (40a, 40b).

6. Dispositif d'assistance hydraulique selon l'une quelconque des revendications précédentes, dans lequel les lignes de contrôle (80a, 80b) comprennent chacune un gicleur de fuite en aval du limiteur de pression (90a, 90b), relié à un réservoir (R) via un piquage.

7. Dispositif d'assistance hydraulique selon l'une quelconque des revendications précédentes, dans lequel la pompe à cylindrée variable (10) est entrainée par une prise de force (14).

8. Dispositif d'assistance hydraulique selon l'une quelconque des revendications précédentes comprenant en outre une valve d'engagement (60), disposé sur les lignes d'alimentation (40a, 40b), pour craboter ou décraboter la machine hydraulique (30).

9. Dispositif d'assistance hydraulique selon l'une quelconque des revendications précédentes, comprenant en outre une pompe de gavage (20) et une valve de pilotage (70), adaptée pour piloter hydrauliquement la valve d'engagement (60) à partir de la pression de la pompe de gavage (Pg).

10. Dispositif d'assistance hydraulique selon l'une quelconque des revendications précédentes, comprenant une unité de calcul (CALC), ladite unité de calcul (CALC) permettant de piloter les limiteurs de débit tarables électriquement (90a, 90b).

11. Dispositif d'assistance hydraulique selon la revendication précédente, dans lequel l'unité de calcul (CALC) est configurée pour piloter le limiteur de pression (90a, 90b) relié à la ligne d'alimentation (40a, 40b) de plus haute pression entre les deux lignes d'alimentation (40a, 40b).

12. Dispositif d'assistance hydraulique selon la revendication 10 ou 11, dans lequel l'unité de calcul (CALC) est configurée pour piloter simultanément les deux limiteurs de pression (90a, 90b) ou pour simultanément ne pas piloter les deux limiteurs de pression (90a, 90b).

13. Dispositif d'assistance hydraulique selon l'une quelconque des revendications 1 à 12, pour un engin esclave.

14. Dispositif d'assistance hydraulique selon l'une quelconque des revendications 1 à 12 en combinaison avec la revendication 10, pour un engin non-esclave, dans lequel l'unité de calcul (CALC) reçoit des instructions de vitesse ou de couple.

15. Engin comprenant un dispositif selon l'une quelconque des revendications précédentes.

16. Paire d'engins comprenant un engin maitre (3) auquel est attaché un engin esclave (2) selon la revendication précédente, par exemple deux véhicules reliés par un attelage ou deux essieux d'un véhicule.

17. Paire d'engins selon la revendication précédente, dans lequel l'engin maitre (3) comprend une prise de force (14) pour alimenter la pompe hydraulique à cylindrée variable (10) de l'engin esclave (2).

18. Procédé d'assistance hydraulique à l'aide d'un dispositif selon l'une quelconque des revendications 1 à 14, ou d'un engin selon la revendication 15 ou d'une paire d'engins selon l'une quelconque des revendications 16 à 17, comprenant les étapes suivantes :
- pilotage d'au moins un des limiteurs de pression tarables électriquement (90a, 90b).

19. Procédé selon la revendication 18, comprenant les étapes suivantes :
- dépilotage des deux limiteurs de pression (90a, 90b),
- crabotage de la machine hydraulique (30),
- pilotage d'un seul parmi les deux limiteurs de pression (90a, 90b).

20. Procédé selon la revendication : 18 ou 19, dans lequel le choix du limiteur de pression à tarer (90a, 90b) et/ou sa valeur de tarage se fait selon les données obtenues par un capteur.

## Patentansprüche

1. Hydraulische Unterstützungsvorrichtung, umfassend:
- eine hydraulische Maschine (30), die geeignet ist, ein Rad (W) eines Geräts zu motorisieren,
- eine Pumpe mit variablem Fördervolumen (10), umfassend einen doppeltwirkenden Zylinder (12), der zwei Kontrollkammern (12a, 12b) definiert, um das Fördervolumen der genannten Pumpe (10) hydraulisch zu steuern,
- zwei Versorgungslinien (40a, 40b), die die hydraulische Maschine (30) und die Pumpe mit variablem Fördervolumen (10) verbinden, um einen geschlossenen Kreislauf zu bilden,
**dadurch gekennzeichnet, dass** die Vorrichtung darüber hinaus umfasst:
- zwei Kontrolllinien (80a, 80b), wobei jede jeweils auf einer der zwei Versorgungslinien (40a, 40b) entnommen ist und ausgestaltet ist, um jeweils eine der zwei Kontrollkammern (12a, 12b) zu versorgen,
- zwei elektrisch tarierbare Druckbegrenzer (90a, 90b), die jeweils auf den zwei Kontrolllinien (80a, 80b) angeordnet sind.

2. Hydraulische Unterstützungsvorrichtung gemäß Anspruch 1,
bei der die zwei Druckbegrenzer (90a, 90b) tariert sind, um mit Druck beaufschlagtes Öl gleichzeitig durchtreten zu lassen.

3. Hydraulische Unterstützungsvorrichtung gemäß irgendeinem der voranstehenden Ansprüche, bei der die zwei Druckbegrenzer (90a, 90b) ausgehend von einem Wert, der zwischen 0 und 5 bar inbegriffen ist, und bevorzugt ab 0 bar tarierbar sind.

4. Hydraulische Unterstützungsvorrichtung gemäß irgendeinem der voranstehenden Ansprüche, bei der die Druckbegrenzer (90a, 90b) in ihrem Mindestwert tariert sind, wenn sie nicht elektrisch gesteuert sind.

5. Hydraulische Unterstützungsvorrichtung gemäß irgendeinem der voranstehenden Ansprüche, bei der die Kontrolllinien (80a, 80b) jeweils eine den Druckbegrenzern (90a, 90b) vorgeschaltete Entnahmedüse umfassen, damit die Steuerlinien (80a, 80b) eine Abzweigung auf den Versorgungslinien (40a, 40b) ausführen.

6. Hydraulische Unterstützungsvorrichtung gemäß irgendeinem der voranstehenden Ansprüche, bei der die Steuerlinien (80a, 80b) jeweils eine dem Druckbegrenzer (90a, 90b) nachgeschaltete Leckdüse umfassen, die über eine Abzweigung mit einem Tank (R) verbunden ist.

7. Hydraulische Unterstützungsvorrichtung gemäß irgendeinem der voranstehenden Ansprüche, bei der die Pumpe mit variablem Fördervolumen (10) durch eine Zapfwelle (14) angetrieben ist.

8. Hydraulische Unterstützungsvorrichtung gemäß irgendeinem der voranstehenden Ansprüche, umfassend darüber hinaus ein Eingreifventil (60), das auf den Versorgungslinien (40a, 40b) angeordnet ist, um die hydraulische Maschine (30) zu kuppeln oder abzukuppeln.

9. Hydraulische Unterstützungsvorrichtung gemäß irgendeinem der voranstehenden Ansprüche, umfassend darüber hinaus eine Pumpenüberförderung (20) und ein Steuerventil (70), das geeignet ist, um das Eingreifventil (60) ausgehend von dem Druck der Pumpenüberförderung (Pg) hydraulisch zu steuern.

10. Hydraulische Unterstützungsvorrichtung gemäß irgendeinem der voranstehenden Ansprüche, umfassend eine Berechnungseinheit (CALC), wobei die genannte Berechnungseinheit (CALC) das Steuern der elektrisch tarierbaren Durchsatzbegrenzer (90a, 90b) zulässt.

11. Hydraulische Unterstützungsvorrichtung gemäß dem voranstehenden Anspruch, bei der die Berechnungseinheit (CALC) ausgestaltet ist, um den Druckbegrenzer (90a, 90b) zu steuern, der mit der Versorgungslinie (40a, 40b) mit dem höchsten Druck zwischen den zwei Versorgungslinien (40a, 40b) verbunden ist.

12. Hydraulische Unterstützungsvorrichtung gemäß Anspruch 10 oder 11, bei der die Berechnungseinheit (CALC) ausgestaltet ist, um gleichzeitig die zwei Druckbegrenzer (90a, 90b) zu steuern oder um gleichzeitig die zwei Druckbegrenzer (90a, 90b) nicht zu steuern.

13. Hydraulische Unterstützungsvorrichtung gemäß irgendeinem der Ansprüche 1 bis 12 für ein untergeordnetes Gerät.

14. Hydraulische Unterstützungsvorrichtung gemäß irgendeinem der voranstehenden Ansprüche 1 bis 12 in Kombination mit Anspruch 10 für ein nicht untergeordnetes Gerät, bei der die Berechnungseinheit (CALC) Geschwindigkeits- oder Kopplungsanweisungen empfängt.

15. Gerät, umfassend eine Vorrichtung gemäß irgendeinem der voranstehenden Ansprüche.

16. Gerätepaar, umfassend ein übergeordnetes Gerät (3), an dem ein untergeordnetes Gerät (2) gemäß dem voranstehenden Anspruch befestigt ist, zum Beispiel zwei durch eine Kupplung oder zwei Achsen eines Fahrzeugs verbundene Fahrzeuge.

17. Gerätepaar gemäß dem voranstehenden Anspruch, bei dem das übergeordnete Gerät (3) eine Zapfwelle (14) zum Versorgen der hydraulischen Pumpe mit variablem Fördervolumen (10) des untergeordneten Geräts (2) umfasst.

18. Hydraulisches Unterstützungsverfahren mithilfe einer Vorrichtung gemäß irgendeinem der Ansprüche 1 bis 14 oder eines Geräts gemäß Anspruch 15 oder eines Gerätepaars gemäß irgendeinem der Ansprüche 16 bis 17, umfassend die folgenden Schritte:
- Steuerung wenigstens einer der elektrisch tarierbaren Druckbegrenzer (90a, 90b).

19. Verfahren gemäß Anspruch 18, umfassend die folgenden Schritte:
- Entsteuerung des zwei Druckbegrenzer (90a, 90b),
- Kuppeln der hydraulischen Maschine (30),
- Steuern eines einzigen von den zwei Druckbegrenzern (90a, 90b).

20. Verfahren gemäß Anspruch 18 oder 19, bei dem die Wahl des zu tarierenden Druckbegrenzers (90a, 90b) und / oder seines Tarierungswertes gemäß den durch einen Sensor erhaltenen Daten erfolgt.

## Claims

1. Hydraulic assistance device comprising:
- a hydraulic machine (30), capable of driving a wheel (W) of a craft,
- a variable displacement pump (10), comprising a double-acting cylinder (12) defining two control chambers (12a, 12b), for hydraulically controlling the capacity of said pump (10),
- two supply lines (40a, 40b), that connect the hydraulic machine (30) and the variable displacement pump (10) in order to form a closed circuit,
**characterised in that** the device further comprises:
- two control lines (80a, 80b), each being respectively drawn from one of the two supply lines (40a, 40b) and being configured to respectively supply one of the two control chambers (12a, 12b),
- two electrically calibratable pressure limiters (90a, 90b) respectively disposed on the two control lines (80a, 80b).

2. Hydraulic assistance device according to claim 1, wherein the two pressure limiters (90a, 90b) are calibrated to allow pressurised oil to pass simultaneously.

3. Hydraulic assistance device according to any preceding claim, wherein the two pressure limiters (90a, 90b) can be calibrated from a value comprised between 0 and 5 bars and preferably from 0 bar.

4. Hydraulic assistance device according to any preceding claim, wherein the pressure limiters (90a, 90b) are calibrated to their minimum value when they are not electrically controlled.

5. Hydraulic assistance device according to any preceding claim, wherein the control lines (80a, 80b) each comprise a sampling nozzle upstream from the pressure limiters (90a, 90b) so that the control lines (80a, 80b) carry out a tapping on the supply lines (40a, 40b).

6. Hydraulic assistance device according to any preceding claim, wherein the control lines (80a, 80b) each comprise a leakage nozzle downstream from the pressure limiter (90a, 90b), connected to a reservoir (R) via a tapping.

7. Hydraulic assistance device according to any preceding claim, wherein the variable displacement pump (10) is driven by a power take-off (14).

8. Hydraulic assistance device according to any preceding claim further comprising an engagement valve (60), disposed on the supply lines (40a, 40b), to engage or disengage the hydraulic machine (30).

9. Hydraulic assistance device according to any preceding claim, further comprising a booster pump (20) and a control valve (70), suitable for hydraulically controlling the engagement valve (60) from the pressure of the booster pump (Pg).

10. Hydraulic assistance device according to any preceding claim, comprising a calculation unit (CALC), said calculation unit (CALC) making it possible to control the electrically calibratable flow rate limiters (90a, 90b).

11. Hydraulic assistance device according to the preceding claim, wherein the calculation unit (CALC) is configured to control the pressure limiter (90a, 90b) connected to the supply line (40a, 40b) of a higher pressure between the two supply lines (40a, 40b).

12. Hydraulic assistance device according to claim 10 or 11, wherein the calculation unit (CALC) is configured to simultaneously control the two pressure limiters (90a, 90b) or to simultaneously not control the two pressure limiters (90a, 90b).

13. Hydraulic assistance device according to any of claims 1 to 12, for a slave craft.

14. Hydraulic assistance device according to any of claims 1 to 12 in combination with claim 10, for a non-slave craft, wherein the calculation unit (CALC) receives speed or torque instructions.

15. Craft comprising a device according to any preceding claim.

16. Pair of crafts comprising a master craft (3) to which is attached a slave craft (2) according to the preceding claim, for example two vehicles connected by a hitch or two axles of a vehicle.

17. Pair of crafts according to the preceding claim, wherein the master craft (3) comprises a power take-off (14) to supply the hydraulic variable displacement pump (10) of the slave craft (2).

18. Method of hydraulic assistance using a device according to any of claims 1 to 14, or of a craft according to claim 15 or of a pair of crafts according to any of claims 16 to 17, comprising the following steps:
- controlling at least one of the electrically calibratable pressure limiters (90a, 90b).

19. Method according to claim 18, comprising the following steps:
- not controlling the two pressure limiters (90a, 90b),
- engaging of the hydraulic machine (30),
- controlling of only one among the two pressure limiters (90a, 90b).

20. Method according to claim 18 or 19, wherein the choice of the pressure limiter to be calibrated (90a, 90b) and/or its calibration value is done according to the data obtained by a sensor.
